Europäisches Patentamt

European Patent Office

Office européen des brevets

(11) Veröffentlichungsnummer: **0 433 756 A2**

(12) **EUROPÄISCHE PATENTANMELDUNG**

(21) Anmeldenummer: 90123203.3

(22) Anmeldetag: **04.12.90**

(51) Int. Cl.5: **B61L 27/04**

(30) Priorität: **20.12.89 DE 3942009**

(43) Veröffentlichungstag der Anmeldung:
**26.06.91 Patentblatt 91/26**

(84) Benannte Vertragsstaaten:
**AT BE CH DK ES FR GB IT LI NL**

(71) Anmelder: **Messerschmitt-Bölkow-Blohm GmbH**
**Robert-Koch-Strasse**
**W-8012 Ottobrunn(DE)**

(72) Erfinder: **Fleckenstein, Hubert**
**Blumenstrasse 2**
**W-8011 Harthausen(DE)**
Erfinder: **Bauer, Günther, Dr.**
**Oderweg 7**
**W-8012 Ottobrunn(DE)**

(54) **System zur Kontrolle und Überwachung der Verteilung von Gütern.**

(57) Die Erfindung bezieht sich auf ein System zur Kontrolle und Überwachung der Verteilung von Gütern. Um eine lückenlose Kontrolle der Verteilung, insbesondere des Transportes von Gütern von dem Hersteller bis zum Verbraucher zu ermöglichen, wird gemäß der Erfindung vorgeschlagen, mit dem zu transportierenden Gut eine erste Einheit, nämlich eine Kontroll-und Überwachungseinheit (1) fest zu installieren, in der güterspezifische Daten gespeichert sind und in der außerdem Sensoren (13) vorgesehen sind, die den momentanen Zustand des Verteilungsprozesses erfassen und in entsprechende Speicher (11) einschreiben. Der zugriff zu den Kontroll- und Überwachseinheiten (1) erfolgt über eine normale Schnittstelle mit Hilfe von einer aktiven Speicherkarte (2), die ihrerseits mit einer Auswerteeinheit (3) verbunden werden kann, mit der ein Protokoll des Verteilungsprozesses erstellt werden kann.

FIG. 1

EP 0 433 756 A2

## SYSTEM ZUR KONTROLLE UND ÜBERWACHUNG DER VERTEILUNG VON GÜTERN

Die Erfindung bezieht sich ein System zur Kontrolle und Überwachung der Verteilung von Gütern und Waren gemäß dem Oberbegriff des Patentanspruches 1.

Es ist eine Vielzahl von Systemen bekannt, bei denen die Verteilung von Gütern, z.B. der Transport, die Lagerung oder Bereitstellung von Waren zumindest in Teilaspekten halb- oder vollautomatisch überwacht wird. Dies erfolgt z.B. bei einer innerbetrieblichen Förderanlage zur Kommissionierung von Ware mit Hilfe von Datenträgern, die an Transportbehältern für die Waren angebracht sind und Zieladressen tragen, sowie mit Datenstationen, die diese Zieladresse beim Vorbeifahren der Transportbehälter auslesen und den Transportweg so einstellen, daß schließlich die Zieladresse erreicht wird; vgl. DE-PS 30 10 637.

Aus der DE-PS 25 08 201 ist eine Vorrichtung zur berührungslosen Eingangs- und Ausgangskontrolle von Transportbehältern bekannt, die jeweils mit einem Sender/Empfänger verbunden sind, der einen programmierbaren Datenspeicher aufweist. Der Sender/Empfänger wird von außen mit Hilfe eines Hochfrequenz-Energiesenders mit Energie versorgt und abgefragt und sendet dann an einen externen Datenempfänger warenspezifische Daten, wie Angaben über die Art der Ware, den Eigentümer oder den Abnehmer. Die empfangenen Daten werden in einer zentralen Auswerteeinheit im Sinne einer Bestandsaufnahme aufbereitet.

Schließlich sind passive Identitätskarten bekannt, die in Form und Aussehen einer Euroscheck-Karte ähnliche, eine integrierte Schaltung aufweisen, in der spezifische Daten des Karteninhabers gespeichert sind; vgl. etwa DE-OS 31 43 915. Zugriff zu den und ebenfalls eine Änderung der Daten sind über einen ortsfesten äußeren Rechner mit einem Abfrage- und Antwortgerät möglich, wobei bei der bekannten Identitätskarte die Datenkommunikation drahtlos erfolgt, wozu auf der Identitätskarate eine Sender/Empfängereinheit mit einer Mikrowellen-Senderantenne und einer Empfangsantenne vorgesehen sind. Eine solche Identitätskarte wird z.B. als Kontokarte, Firmenausweis mit Zugangskontrolle, Versicherungsausweis etc. verwendet.

Alle diese Systeme berücksichtigen einen Teilaspekt der Güterverteilung. Containertransporte bzw. verpackte Waren und Güter erfordern jedoch eine kontinuierliche Überwachung und Kontrolle vom Warenerzeuger bis hin zum Warenendverbraucher, insbesondere im Hinblick auf die Produkt- und Gefährdungshaftung sowie im Sinne eines volkswirtschaftlichen Gütertransportsystemes. Nachdem das Transportsystem von Waren und Gütern im Handel in der Regel in einem sog. offenen System erfolgt, bei dem eine lückenlose Dokumentation vom Hersteller bis zum Verbraucher oft nicht möglich ist, ist eine lückenlose Beweisführung über den betriebswirtschaflich und technischen Transportverlauf, vor allem auch im Hinblick auf die Umweltgefährdung, erwünscht. Halbautomatische bzw. vollautomatische Betriebsleitsysteme sind im wesentlichen nur für interne Förderanlagen, in Teilaspekten hinsichtlich der Zielanlagen auch im Schienenverkehr bekannt. Ansonsten werden fast ausschließlich Versandpapaiere für eine betriebswirtschaftliche Beweisführung verwendet. Hierbei sind unzulässige Eingriffe in den Transport von Gütern möglich und aufgrund des verwendeten Systemes praktisch nicht auszuschließen.

Der Erfindung liegt die Aufgabe zugrunde, ein System der eingangs genannten Art so weiterzuentwickeln, daß eine lückenlose Kontrolle des Güterverkehrs möglich ist und ein unzulässiger Eingriff in diese Verteilung erschwert wird.

Diese Aufgabe ist gemäß der Erfindung durch die im kennzeichnenden Teil des Patentanspruches 1 angegebenen Merkmale gelöst.

Demgemäß ist die erste Einheit als Kontroll- und Überwachungseinheit fest mit dem zu verteilenden Gut bzw. dem Transportbehälter verbunden und begleitet das Gut auf dem gesamten Weg des Verteilungsprozesses. Sie weist neben einem Rechner zusätzlich Sensoren und Effektoren auf, mit denen der momentane Zustand des Verteilungsprozesses aufgezeichnet, gespeichert und ggf. angezeigt wird.

Zugriff zu dieser Kontroll- und Überwachungseinheit ist lediglich mit einer aktiven programmierbaren Speicherkarte als zweiter Einheit möglich, wobei durch entsprechende Codes sichergestellt wird, daß nur autorisierte Personen Zugriff zu den Daten aller Einheiten erhalten.

Die Auswerteeinheit als dritte Einheit weist eine Leseschaltung für die Speicherkarte auf, die in dieser gespeicherte und durch die Kommunikation mit der Kontroll- und Überwachungseinheit fortgeschriebene Daten ausliest und etwa zu einem Protokoll des Verteilungsprozesses zusammenfaßt.

Das gesamte System und insbesondere die Kontroll- und Überwachungseinheit kann in Kleinstbauweise nach Art einer Mikrosystemstruktur aufgebaut werden.

Die Kontroll- und Überwachungseinheit ist z.B. eine kompakte verplombte Box, die über eine standardisierte Schrittstelle zur Datenkommunikation mit der Speicherkarte verfügt und je nach Anwendungsfall mit unterschiedlichen Sensoren und Effektoren ausgerüstet ist sowie für unterschiedliche Funktionen programmiert werden kann. Die Kontroll- und Überwachungseinheit sollen möglichst manipulationsverhindert ausgelegt werden und etwa in der Verstrebung eines Containers montiert werden, d.h. also nicht sichtbar und schwer zugänglich sein. Dies trifft insbesondere für die Elemente der Kontroll- und Überwachungseinheit zu, die wesentliche Daten für die Waren oder Güter und/oder den Verteilungsprozeß tragen bzw. verarbeiten, so z.B. der Rechner. Selbstverständlich bleibt die Schnittstelle, in die die aktive Speicherkarte eingefügt werden kann, frei zugänglich. Die Speicherkarte ist entsprechend den oben erwähnten aktiven programmierbaren Karten ausgebildet. Sie dient nicht nur zum Datenzugriff auf die Kontroll- und Überwachungseinheit, sondern ist gleichzeitig ein Ersatz für die bisherigen Versand- und Transportpapiere, dient somit als elektronischer Frachtbrief und kann als solcher auch abgelegt und aktiviert werden. Mit ihr können z.B. Übernahme bzw. Abgabe der Transportverantwortung und Kontrollgänge quittiert werden, etwaige von der Kontroll- und Überwachungseinheit angezeigte momentane Zustände des Transportprozesses, z.B. ein Alarmzustand, quittiert oder der Zustand der Ware innerhalb des Zuständigkeitsbereiches dokumentiert werden. Für den Absender bzw. Empfänger des zu verteilenden Gutes kann über die Speicherkarte der gesamte Weg des Verteilungsprozesses dokumentiert wenden, so z.B die Übergabe des Gutes von einem Lastkraftwagen auf den Schienenverkehr, wobei gleichzeitig Datum, beteiligte Personen usw. angegeben werden. Ebenso können die in der Speicherkarte gespeicherten Auslesungen über die bisherigen momentanen Zustände des Warengutes und des Verteilungsprozesses dem jeweiligen Inhaber der Speicherkarte mit Hilfe der Auswerteeinheit angezeigt werden, so z.B. etwaige Alarmzustände oder Überschreitungen von Grenzwerten. Die Speicherkarte ersetzt somit nicht nur die Lieferpapiere, sondern gibt auch die Möglichkeiten von mehr Information und mehr Kontrolle.

Mit der dritten Einheit, der Auswerteeinheit, kann z.B. bei jeder Weitergabe des Transportgutes der bisher für den Transport Verantwortliche die bis zum Zeitpunkt der Abgabe in der Kontroll- und Überwachungseinheit gespeicherten Daten auslesen und als Nachweis für seine Leistung dokumentieren. Der Empfänger des Gutes hat seinerseits Zugriff auf die gespeicherten Daten während der gesamten Laufzeit des Verteilungsprozesses und kann damit feststellen, ob innerhalb dieses Verteilungsprozesses Grenzwerte überschritten wurden und welche Personen während des Verteilungsprozesses für das Transportgut verantwortlich waren. Die dritte Einheit kann zusätzlich als tragbare Quick-look-Einheit für die Schnellkontrolle der Waren und des Verteilungsprozesses vorhanden sein. Eine solche tragbare Einheit kann auch einen Drukker erhalten, mit dem begleitende Fakten des Verteilungsprozesses, wie Zeit, Kontrollen, Überwachungsereignisse, Geschwindigkeit des Transports etc. ausgedruckt werden können.

Die Speicher in der Kontroll- und Überwachungseinrichtung und innerhalb der Speicherkarten werden durch eine Programmiereinheit programmiert. Hiermit werden u.a. die erforderlichen Schritte und Überwachungskriterien innerhalb des Verteilungsprozesses und der Verteilungsweg festgelegt. Auch hierbei sind Code-Schaltungen vorgesehen, um nur autorisierten Personen eine Programmierung zu ermöglichen, die Zugang nur über eine Originalcodierung haben, was in Anbetracht der Gefährdungshaftung vordringlich ist.

Das System gemäß der Erfindung kann vorzugsweise durch Module erweitert werden, z.B. durch Sensoren, Sicherungs- oder Positionsmodule, die am Ort der Zusammenstellung der Güter installiert werden und z.B. Überwachungs- und Freigabesignale für den Transport oder Signale hinsichtlich Grenzwertüberschreitungen geben. Sollte z.B. dieses Überwachungssignal anstehen, so werden etwa durch Effektoren entsprechende Alarme ausgelöst. Ebenso sind Positionsmodule denkbar, die mit der Kontroll- und Überwachungseinheit direkt am zu verteilenden Gut bzw. dem Transportbehälter angeordnet sind und ständig die Positionskoordinaten dieses Behälters senden, so daß der Weg des zu transportierenden Gutes kontinuierlich überwacht werden kann. Derartige Sicherheits- und Positionsmodule lassen sich auch einsetzen zum Schutz von persönlichem Eigentum, wie Container, Gepäckstücke, Pkw u.ä. mehr. Diese Positionsmodule sind als Langzeitfunktionsmodule auch in Ruhestromschaltung verwendbar.

Ferner sind z.B. Sendemodule mit Laser-, IR-, akkustischen oder optischen Sendern und Empfängern beinhaltet, die in die Kontroll- und Überwachungseinheit integriert sind. Die Sendemodule werden über die Schnittstellen der Überwachungs- und Kontrolleinheit programmiert. Kommt z.B. ein Lastkraftwagen, der einen Container mit einer Kontroll- und Überwachungseinheit transportiert, in die Nähe einer Toreinfahrt, eines Grenzüberganges o.dgl., allgemein in die Nähe einer sog. zentralen Warte, so kann sich der Container über das Sendemodul selbst identifizieren, sofern die zentrale Warte entsprechende Empfangsschaltungen und ggf. Sendeschaltungen aufweist.

Automatische Positions- und Sicherheitsmodule können auch bei Gefahrgut eingesetzt werden, wodurch auch hier die Überwachung verbessert wird.

Es ist darüber hinaus möglich, mehrere Kontroll- und Überwachungseinheiten über eine Mikro-Bus-Struktur, z.B. einem Lichtleiterbus, miteinander zu verbinden. Die Daten mehrerer Güter bzw. Transportbehälter können über den gemeinsamen Bus ausgelesen werden, wobei es etwa über eine Adressierung möglich ist, in die Speicher der einzelnen Überwachungs- und Kontrolleinheiten Daten einzuschreiben. Dadurch ist auch eine Überwachung durch Effektoren und Anzeige, beispielsweise im Führerstand eines Transportzuges, möglich.

Weitere Ausgestaltungen der Erfindung ergeben sich aus den Unteransprüchen.

Die Erfindung ist in einem Ausfürungsbeispiel anhand der Zeichnung näher erläutert. In der Zeichnung stellen dar:

Fig. 1    ein Blockschaltdiagramm eines Systems zur Kontrolle und Überwachung der Verteilung von Gütern gemäß der Erfindung, in dem die funktionalen Einheiten dargestellt sind;

Fig. 2    die schematische Ansicht eines Transportbehälters mit der Anordnung einer Kontroll- und Überwachungseinheit eines Systemes gemäß der Erfindung;

Fig. 3    eine Darstellung eines Familienkonzeptes des Systemes gemäß der Erfindung beim Transport einer Vielzahl von Gütern, in diesem Fallet mit Hilfe eines Güterzuges;

Fig. 4    die schematische eines mehrere Transportbehälter tragenden Lastkraftwagens, ebenfalls zur Darstellung eines Familienkonzeptes des Systems gemäß der Erfindung.

Fig. 5    ein Funktions-Blockdiagramm einer Kontroll- und Überwachungseinheit.

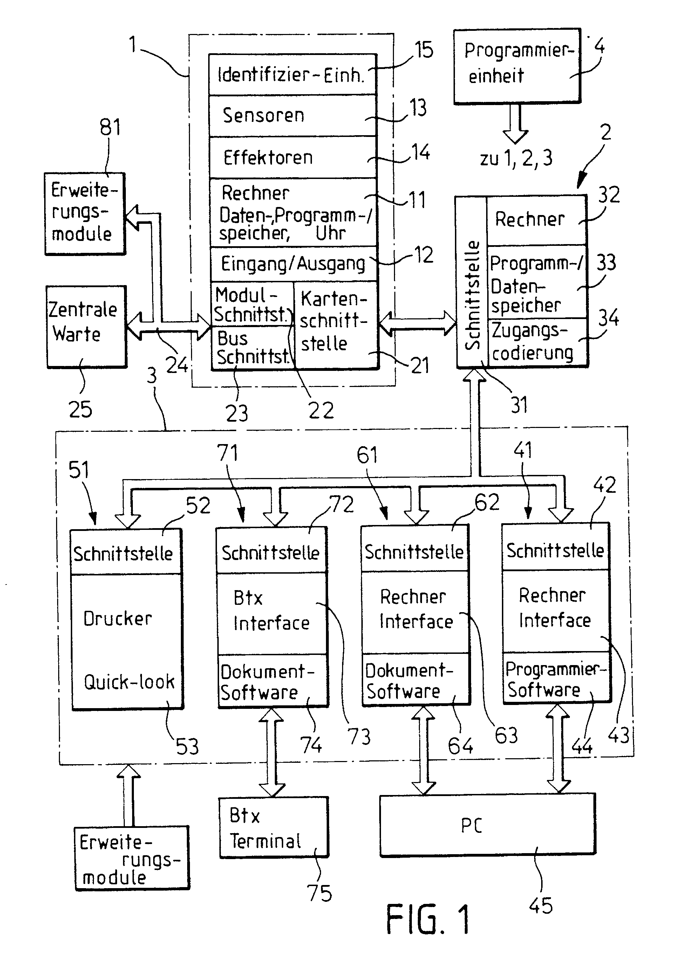

Ein System zur Kontrolle und Überwachung der Verteilung von Gütern besteht gemäß Fig. 1 aus einer ersten Einheit 1, nämlich einer Kontroll- und Überwachungseinheit, einer zweiten Einheit 2, nämlich einer aktiven programmierbaren Speicherkarte, einer dritten Einheit 3, nämlich einer Auswerteeinheit sowie einer vierten peripheren Einheit 4, nämlich einer Programmiereinheit, die ihrerseits über eine Originalcodierung 4a zugänglich ist. Die Kontroll- und Überwachungseinheit 1 ist fest mit einem Transportbehälter 5 für ein zu transportierendes Gut 6, z.B. im Bereich von den Standfüßen des Transportbehälters verbunden. Die Kontroll- und Überwachungseinheit weist einen Rechner 11 mit Daten- und Programmspeichern sowie einer Echtzeituhr auf, der mit einer Eingabe/Ausgabeeinheit 12 verbunden ist. Ferner sind Sensoren 13, Effektoren 14 und eine Identifiziereinheit 15 vorgesehen.

Die Sensoren 13 messen z.B. die mechanischen Belastungen des zu transportierenden Gutes, wie Beschleunigung oder Druck, die klimatischen Belastungen, wie Temperatur, Feuchte, die chemische Belastung, wie Geruch, Dämpfe etc. und weitere, für das zu transportierende Gut wichtige Faktoren.

Die Effektoren 14, die den Sensoren 13 zusammenarbeiten, zeigen z.B. die Funktionstüchtigkeit verschiedener Komponenten des Transportsystemes an oder lösen bei Überschreiten von vorgegebenen Grenzwerten, z.B. hinsichtlich der Zeit oder mechanischen Belastungen des zu transportierenden Gutes, akustischen oder optischen Alarm aus.

Der Rechner 11 mit den Daten- und Programmspeichern sowie der Echtzeituhr ist nur für autorisierte Personen, wie Absender und Empfänger zugänglich, was mit Hilfe eines Zugangscodes erfolgt. Mit diese ist der Ablauf des Programmes, d.h. des Verteilungsprozesses zu starten, zu stoppen oder zu verändern. Die individuelle Codierung zur Person und zu dem Transportweg wird aktuell über die Programmiereinheit 4 und die Originalcodierung 4a programmiert und kann nur durch eine dritte autorisierte Person durch eine Originalcodierung neutralisiert bzw. neu eingegeben werden. Hier erfolgt auch die Eingabe von Grenzwerten für das jeweilige Transportgut, die für die Überwachung notwendig ist.

Aufgabe des Rechners mit seinen Systemkomponenten ist es, während der Laufzeit des Transportgutes alle für wesentlich erachteten Parameter mit Datum und Uhrzeit zu protokollieren. Dies sind z.B. die Zeitpunkte, an denen ein Grenzwert überschritten wurde, die Dauer dieser Überschreitung, die Wartezeit, bis ein ausgelöster Alarm quittiert bzw. behoben wurde oder betriebswirtschaftliche Daten, wie Übergabezeitpunkte der Verantwortlichkeit von einem Spediteur auf einen anderen.

Die Eingabe/Ausgabeeinheit ist dreiteilig aufgebaut und weist eine Kartenschnittstelle 21, eine Busschnittstelle 22 sowie eine Modulschnittstelle 23 auf, wobei diese beiden letzten Schnittstellen zu einer gemeinsamen Schnittstelle zusammengefaßt werden können. Die Kommunikation der Kontroll- und Überwachungseinheit zur Außenwelt erfolgt ausschließlich über standardisierte Schnittstellen. Für die Programmierung, Codierung, Überwachung und Kontrolle der Kontroll- und Überwachungseinheit 1 können sämtliche Daten mit Hilfe der Speicherkarte 2 ein- bzw. ausgelesen werden. Die Kontroll- und Überwachungseinheit 1, und hier insbesondere die datenverarbeitenden Elemente, d.h. insbesondere der Rechner, werden möglichst an versteckter Stelle des Gutes bzw. des Transportbehälters angeordnet, um eine Manipulation möglichst zu verhindern.

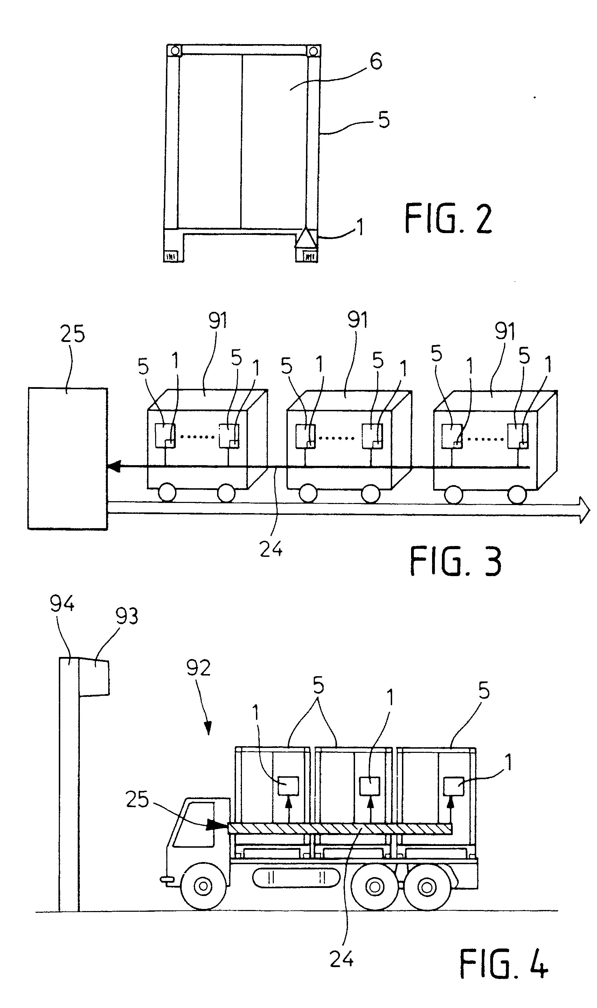

Mehrere solcher Kontroll- und Überwachungseinheiten 1 können z.B. dann, wenn, wie in den Figuren 3 und 4 gezeigt, mehrere Transportbehälter 5 auf einem Fahrzeug oder einem Zug transportiert werden, über die Busschnittstelle 22 mit einem gemeinsamen Datenbus 24 zusammengeschaltet und in einer Zentraleinheit 25, einer sog. zentralen Warte, zusammengefaßt werden, in der die Daten aller Kontroll- und Überwachungseinheiten gesammelt und ggf. zusammengefaßt werden. Mit Hilfe dieser zentralen Warte 25 können z.B. Durchgangskontrollen des gesamten Transportgutes an bestimmten Durchgangsstationen erleichtert werden. Der Datenbus 24 ist z.B. ein Lichtwellenleiterbus. Über diesen gemeinsamen Datenbus der einzelnen Kontroll- und Überwachungseinheiten werden z.B. an die zentral Warte die Alarmart oder der Alarmort in einem der Transportbehälter gemeldet; ferner können hier auch zentral die oben erwähnten Sensorsignale hinsichtlich mechanischer oder klimatischer Belastungen des Transportgutes gesammelt werden. Die Energieversorgung der zentralen Warte erfolgt bevorzugt über den Datenbus selbst; für diese Energieversorgung ebenso wie für diejenige der Kontroll- und Überwachungseinheiten können Batterien vorgesehen sein, die in üblicher Weise mit eine Batteriepuffer versehen sind, um ehe Datenlöschung zu verhindern. Ruhestromschaltungen sind hierbei zu bevorzugen. Unabhängig davon, ob mehrere Kontroll-und Überwachungseinheiten 1 über einen Datenbus 24 zusammengeschaltet sind oder nicht, kann auf jede Kontroll- und Überwachungseinheit 1 mit Hilfe einer Speicherkarte 2 zugegriffen werden.

Die Identifiziereinheit 15 trägt den Identifizierungscode des zugeordneten Transportbehälters und damit auch des transportierten Gutes. Die Identifiziereinheit 15 besteht z.B. aus einem Identifizierungssenscr, z.B. mit einem Barcode und einer nachgeschalteten intelligenten Elektronik. Der im technischen Umschlagkonzept eines schnellen Güterverkehrs notwendige Identifizierungscode wird im Online-Verfahren auf die Kontroll- und Überwachungseinheit mit Hilfe der Speicherkarte 2 übertragen. Der Identifzierungscode beinhaltet Art der Ware, Zieladresse, Name des Absenders und Empfängers usw. und ist gleichzeitig ein Eingangssignal im Gesamtsystem in bezug auf Beladen und Entladen des Transportbehälters. Die automatische Identifiziereinheit ist im Prinzip ein Effektor mit nachgeschalteten Signalgebern und somit ein Signalglied zum einen für die externe Logistik und zum anderen für die interne Kontrolle und Überwachung des Warengutes auf dem Transportweg. Wie in Fig. 1 angedeutet, ist es ebenfalls denkbar, daß die Daten der Indentifizierenheit nicht nur über die aktive Speicherkarte 2 ein- und ausgelesen werden können; vielmehr ist auch ein Datenverkehr mit einer externen Abfrageeinheit 16 möglich, die ihrerseits in Signalkontakt z.B mit der Auswerteeinheit 3 steht. Ebenso ist eine Übertragung auf eine weiter unten beschriebene transportable Quick-look-Einheit 51 der Auswerteeinheit 3 möglich.

Die Speicherkarte 2 ist die Zugangseinheit zur Kontroll- und Überwachungseinheit 1 und ist eine aktive codierbare Einheit. Sie beinhaltet alle erforderlichen Systeme eines interdisziplinären Online-Systemes. Die Speicherkarte 2 weist neben einer Schnittstelle 31 als Eingangs/Ausgangsschaltung einen Rechner 32, Programm- und Datenspeicher 33 sowie eine Zugangscodierung 34 auf. In dieser Zugangscodierung erfolgt eine Codierung nach Nutzern, wodurch u.a. eine eindeutige Zuordnung des Eigentümers des Transportgutes möglich ist. Über die Schnittstelle 31 kann die Speicherkarte 2 von außen mit Hilfe der Programmiereinheit 4 und der Originalcodierung 4a programmiert werden; über diese Schnittstelle erfolgt auch die Eingabe und Entnahme von Daten in die und aus der Kontroll- und Überwachungseinheit 1. Außerdem können über diese Schnittstelle Daten mit der Auswerteeinheit 3 ausgetauscht werden.

Die Auswerteeinheit 3 weist als Hauptbestandteil eine stationäre Auswerteeinheit 41 mit einer Schnittstelle 42 für die Speicherkarte 2, einem Rechnerinterface 43 und einem Grundprogrammodul für eine Grundsoftware auf. Dieser Block kann z.b. mit einem Rechner 45, etwa einem Personalcomputer, verbunden sein. Mit dieser Anordnung können sämtliche Daten aus der Speicherkarte 2 ausgelesen und aufbereitet werden; ebenso ist es möglich, über den Rechner 45 Programme in die Speicherkarte 2 einzuschreiben. Neben dieser stationären Auswerteeinheit 41 ist noch eine tragbare Einheit 51 vorgesehen, die ebenfalls eine Schnittstelle 52 für die Speicherkarte 2 und anschließend einen z.B. grafikfähigen Drucker 53 aufweist. Diese transportable Einheit kann im Taschenformat als sog. Quick-look-Einheit ausgeführt werden zeigt der jeweiligen bedienenden Person aktuelle Kontrolldaten über den Verteilungsprozeß an. Dieses kann z.B. nach dem Ja/Nein-Prinzip erfolgen.

Des weiteren kann eine weitere ortsfeste Nurleseeinheit 61 vorgesehen werden, die z.B. am Arbeitsplatz des bereits erwähnten Personalcomputers 45 eingerichtet ist und daher über die übliche Peripherie verfügt, wie Bildschirm, Tastatur, Drukker, Plotter etc.. Diese Einheit weist eine Kartenschnittstelle 62, ein Rechnerinterface 63 und ein Softwaremodul 64 für eine Grundsoftware hinsichtlich der Dokumentation auf. In dieser Einheit können anhand der vorliegenden und eingebbaren Programme die gespeicherten Daten anwendungsbezogen aufbereitet werden.

Schließlich kann noch eine BTX-Einheit 71 mit einer Kartenschnittstelle 72, einem BTX-Interface und einem Softwaremodul 75 hinsichtlich der Dokumentation vorgesehen sein, wobei diese Einheit mit einem BTX-Terminal 75 verbunden ist. Mit einer entsprechend modifizierten Kartenschnittstelle können die gespeicherten Daten auf dem BTX-Terminal 75 dargestellt und von dort zu anderen Datenstationen übertragen werden.

Wie in Fig. 1 angedeutet, können die einzelnen Kontroll- und Überwachungseinheiten 1 noch mit Erweiterungsmodulen 81, z.B. für die Einkopplung eines Fahrtenschreibers, erweitert werden, die über die Modulschnittstelle 22 bzw. die kombinierte Schnittstelle 22, 23 angeschlossen werden. Die Erweiterungsmodule können z.B. Steckmodule sein. Die zentrale Warte 25 und die Erweiterungsmodule 81 ermöglichen ein Familienkonzept für das gesamte Kontroll- und Überwachungssystem.

In Fig. 3 sind drei Güterwagen 91 mit jeweils mehreren Transportbehältern 5 gezeigt, mit denen jeweils eine Kontroll- und Überwachungseinheit 1 verbunden ist. Sämtliche Kontroll- und Überwachungseinheiten sind über einen Bus 24 miteinander verbunden und führen zu einer zentralen Warte 25. Ähnlich ist in Fig. 4 ein Lastkraftwagen 22 gezeigt, der mehrere, in diesem Falle 3 Transportbehälter 5 trägt, die jeweils eine Kontroll- und Überwachungseinheit 1 tragen, die wiederum über einen Datenbus 24 miteinander verbunden sind, der bei einer zentralen Warte 25 endet. Teil dieser zentralen Warte oder zusätzlich hierzu können die erwähnten Erweiterungsmodule 81 vorgesehen sein, z.B. die oben erwähnten Positions- und Sendemodule. In der zentralen Warte werden dann die Daten sämtlicher Kontroll- und Überwachungseinheiten, soweit nötig, zusammengefaßt. Hiermit ist es z.B. möglich, daß ein, wie in Fig. 4 gezeigt, durch eine Pforte 93 fahrender Lastkraftwagen 92 sich selbst identifiziert, sofern in der Pforte 93 ebenfalls eine zentrale Warte 94 vorgesehen ist, die auf die zu empfangenden Daten programmiert ist. Sollte der Lastkraftwagen andere als die vorgegebenen Güter oder die Güter nicht in der vorgegebenen Anzahl geladen haben, so kann durch die zentrale Warte 93 Alarm ausgelöst werden. Mit der zentralen Warte können Folgereaktionen geschaltet, sowie die Positionen von Transportbehältern und deren Aktionen gemeldet und detektiert werden. Ebenso können ggf. mit der zentralen Warte 93 die Daten aus den Erweiterungsmodulen 81 mit vorhandenen Vorgabedaten verglichen werden.

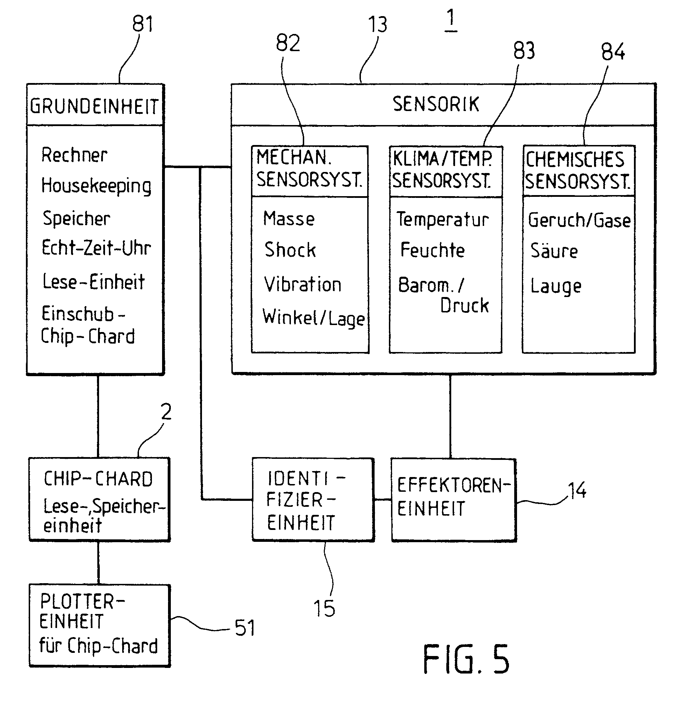

In Fig. 5 sind schematisch die Funktions-Einheiten der Überwachungs- und Kontrolleinheit 1 angegeben. Eine Grundeinheit 81 umfaßt im wesentlichen den Rechner, der die Verwaltung, das sog. Housekeeping, übernimmt, die Daten- und Programmspeicher, eine Echtzeituhr, die Lesereinheit sowie den Einschub für die aktive Speicherkarte, somit die Elemente 11, 12, 21, 22 und 23 der in Fig. 1 dargestellten Einheit 1. Die Sensoren 13 weisen ein mechanisches Sensorsystem 82, ein Sensorsystem 83 hinsichtlich Klima und Temperatur und ein chemisches Sensorsystem 84 auf. Mit diesen Sensoren werden die Masse des transportierenden Gutes, etwaige Schocks auf das Gut, Vibrationen oder auch die Position des zu transportierenden Gutes vermessen bzw. die Temperatur, die Feuchte und der barometrische Druck oder der Geruch, die Bildung von Gasen, von Säuren und Laugen. Die Sensorik 13 ist einmal mit der Grundeinheit 81 verbunden, wobei jedoch auch Verbindungen zu der Effektoreneinheit 14 möglich sind, um so unmittelbar z.B. einen Alarm auszulösen. Die Indentifiziereinheit 15 ist wiederum mit der Grundeinheit und auch mit der Effektoreneinheit 14 verbunden, so daß etwaige Daten des transportierenden Gutes z.B. direkt über Effektoren angezeigt werden. Mit der Grundeinheit kommuniziert die aktive Speicherkarte 2, die ihrerseits in die transportable Quick-look-Einheit 51 eingeschoben werden kann, um so schnell Daten auszudrucken.

## Ansprüche

1. System zur Kontrolle und Überwachung der Verteilung von Gütern und Waren mit einer ersten, mit dem Gut bzw. dessen Transportbehälter fest verbundenen Einheit, die eine Schaltung mit einem programmierbaren Speicher zur Darstellung der Art des Gutes und der Zieladresse sowie weiterer gutspezifischer Daten aufweist, mit einer zweiten Einheit zur Kommunikation mit der ersten Einheit, die eine Speicherschaltung zum Senden und Empfangen von Daten aus und von der ersten Einheit aufweist, sowie mit einer Auswerteeinheit zum Auswerten der zu sendenden und empfangenden Daten, **gekennzeichnet** durch die folgenden Merkmale:

   a) die erste Einheit (1) enthält als Kontroll- und Überwachungseinheit einen Rechner (11) sowie Sensoren (13) und Effektoren (14) zum Erfassen, Speichern und ggf. zur Anzeige des momentanen Zustandes des Verteilungsprozesses und/oder des Warengutes;

   b) die zweite Einheit (2) ist als aktive programmierbare Speicherkarte (2) mit einer integrierten Schaltung (31 bis 34) mit Daten- und Programmierspeichern (33) ausgebildet, die über eine Schnittstelle (31) zum Eingeben und Aufnehmen von Daten mit der Kontroll- und Überwachungseinheit (1) verbindbar ist, und

   c) die Auswerteeinheit (3) weist eine Schnittstelle (42, 52, 62, 72) für die Speicherkarte (2) auf.

2. System nach Anspruch 1, **dadurch gekennzeichnet,** daß die Kontroll- und Überwachungseinrichtung (1) und/oder die Speicherkarte (2) Codeschaltungen (34, 15) aufweisen, die den Zugriff zu diesen Einheiten (1,2) nur durch einen in die Speicherkarte (2) einzugebenden Code (Originalcodierung) gestatten.

3. System nach einem der vorhergehenden Ansprüche, **dadurch gekennzeichnet,** daß der Datenspeicher der Speicherkarte (2) von der Kontroll- und Überwachungseinheit (1) bzw. nach Eingabe einer Originalcodierung zu belegen ist.

4. System nach einem der vorhergehenden Ansprüche, **dadurch gekennzeichnet,** daß die Kontroll- und Überwachungseinheit (1) eine Eingangs/Ausgangsschaltung aufweist, die eine Schnittstelle (21) für die Speicherkarte (2) und zusätzlich eine Schnittstelle (23) für ein Bussystem (24) aufweist, über die mehrere solcher Kontroll- und Überwachungseinheiten (1) zusammenschaltbar sind.

5. System nach Anspruch 4, **dadurch gekennzeichnet,** daß der gemeinsame Datenbus (24) ein Lichtleiterbus ist.

6. System nach Anspruch 4 oder 5, **dadurch gekennzeichnet,** daß jeweils mehrere Kontroll- und Überwachseinheiten (1) über das Bussystem (24) mit einer Zentraleinheit (25) verbunden sind, in der relevante Daten aller Kontroll- und Überwachungseinheiten (1) vorliegen.

7. System nach einem der vorhergehenden Ansprüche, **dadurch gekennzeichnet,** daß die Sensoren (13) jeder Kontroll- und Überwachungseinheit (1) mechanische, chemische und/oder klimatische Einflüsse auf das zu transportierende Gut registrieren und anzeigen.

8. System nach einem der vorhergehenden Ansprüche, **dadurch gekennzeichnet,** daß mit der Kontroll- und Überwachungseinheit (1) Erweiterungsmodule (81) verbindbar sind, mit denen zusätzliche Kontroll- und Überwachungsfunktionen ausführbar sind.

9. System nach einem der vorhergehenden Ansprüche, **dadurch gekennzeichnet,** daß die Kontroll- und Überwachungseinheit (1) eine Identifiziereinheit (15) aufweist, in der das Warengut und/oder den Verteilungsprozeß kennzeichnende Daten gespeichert sind, und daß die Identifiziereinheit mit einer externen Abfrageeinheit (16) kommuniziert.

10. System nach Anspruch 9, **dadurch gekennzeichnet,** daß die Abfrageeinheit (16) über einen Signalpfad mit der Auswerteeinheit (3) verbunden ist.

11. System nach einem der vorhergehenden Ansprüche, **dadurch gekennzeichnet,** daß die für die Waren oder Güter und/oder den Verteilungsprozeß signifikante Daten enthaltenden Elemente der Überwachungs- und Kontrolleinheit (1), insbesondere der Rechner, kleinbauend sind und am Gut bzw. dessen Transportbehälter versteckt montiert sind.

FIG. 1

FIG. 2

FIG. 3

FIG. 4

FIG. 5